# EUROPEAN PATENT APPLICATION

(11) **EP 4 732 920 A1**
(43) Date of publication of application: **29.04.2026**
(21) Application number: 24209083.5
(22) Date of filing: 26.10.2024
(51) Int. Cl.: A63F 13/213, A63F 13/214, A63F 13/2145, A63F 13/245

(54) **AN ELECTRO-MECHANICAL CONTROLLER FOR COMPUTER SOFTWARE, IN PARTICULAR COMPUTER GAMES**

(71) Applicant: Bohosiewicz, Lukasz, 44-240 Zory (PL)
(72) Inventor: Bohosiewicz, Lukasz, 44-240 Zory (PL)

(57) **Abstract**

An electro-mechanical controller for computer software, in particular for computer games, characterized in that a moving element (4), within which the object (1) is placed and moved, is linked to an user manipulator (6) by mechanical connectors (5), and the IR frame (2) located between the moving element (4) and a display (3) reads in real time the object's (1) position while its movement in the IR frame (2) view and transmits it to the data-processing module (8).

## Description

The subject matter of the invention is an electro-mechanical controller for computer software which can be used in particular for computer games as well as applications for training or rehabilitation.

Currently, interaction with computer programs, such as computer games, is implemented using input devices such as keyboards, buttons, manipulators, styluses, mice, trackballs, touchpads, touch screens, IR frames and laser pointers. The movement of a cursor or object on the screen is directly visible, and its inertia is simulated by software to mimic the physical properties of real objects. Examples of mechanical systems that combine physical elements with software include the following machines: Angry Birds Arcade (https://youtu.be/2I5czEICcYo), Break the Plate (https://youtu.be/HamYsihkLLs), Fruit Ninja FX (https://youtu.be/klQ74bWgOKI). In these solutions, a physical object or action is passed to the software, but the physics of the movement and interaction with that object are completely or largely simulated by the software, rather than based on the actual physical properties of the object.

There are also mechanical solutions for training or play, in which physical objects are moved by mechanical or electromechanical manipulators.

Until now, however, no solution has been developed that combines the interaction of a physical object with computer software in a way that respects the actual laws of physics, such as inertia, friction or momentum.

The solution according to the invention is an electro-mechanical controller that operates according to the true laws of physics, enabling more natural interaction with computer programs. The device consists of the following components: a physical object (1) having a certain mass that is set in motion by the user, a moving element (4) within the object (1) is placed and moved, and which allows the object (1) to be moved, an user manipulator (6) used for moving the object by the user, mechanical connectors (5) that transmit the movement of the user manipulator (6) to the moving element (4), IR frame (2), located between the moving element (4) and a display (3), with sensors that detect the object's (1) position while its movement in the IR frame (2) view, a data-processing module (8) with control software that analyses the data from the IR frame (2) and, based on that data, responds to the movement of the object (1) or cursor in a computer program. An user manipulator (6) is electric or mechanical. A moving element (4) favourably is a treadmill. The mechanical connectors (5) are cables, linkages or actuators. The controller favourably is equipped with vibration or touch systems that can enhance user immersion.

The user moves a manipulator connected to the moving element. The movement of the manipulator is transmitted to the moving element by the connectors. An object with a certain mass moves on the moving element according to the laws of physics. The IR frame reads in real time the object's position and transmits it to the data-processing module. The control software analyses the data from the IR frame about the object's position.

The use of an electro-mechanical controller introduces a whole new quality of interaction with computer software, particularly computer games and training or rehabilitation applications. Thanks to the physical presence of the object, which is subject to the actual laws of physics, the user has to incorporate natural physical phenomena into his or her actions, which requires more skill but is more natural for the user. The interaction becomes much more realistic and therefore more engaging. The use of real laws of physics in the interaction with the software makes the experience more realistic. The user has to react to real phenomena such as inertia, friction and acceleration. This makes the controller a perfect tool for simulation applications, games or virtual training where realism is crucial. Instead of relying on abstract control principles (e.g. buttons or a mouse), the user intuitively reacts to the physical action of the object, making the operation more natural. This can be particularly beneficial in training, rehabilitation or educational applications where ease of use is essential. The physical object that user moves is more accurate in replicating movements compared to a computer simulation. With actual position measurements using an IR frame, the controller can accurately communicate the object's position to the software. This can be particularly useful in high-precision applications such as technical, surgical or engineering simulations. In sports games or training simulators, the use of real physics makes training more similar to real-world conditions. As a result, users can better develop skills under conditions that resemble the real world, which can be important e.g. for athletes. By forcing natural movements and the need to respond to physical laws, the controller can be applied in rehabilitation. Patients can perform exercises on the controller, that require coordination and anticipatory movement, which can support the motor rehabilitation process in a more engaging and interactive way. Traditional input devices, such as mice or keyboards, can lead to hand or eye fatigue. A physical controller requires different movements that are more ergonomic and less fatiguing for the user, especially when working with the software for longer periods of time. The controller can be applied in a wide variety of contexts - from computer games to training simulations to rehabilitation applications. Due to its flexibility in application, the invention has the potential to be integrated into a wide range of software, increasing its commercial value. Eliminating the need for software to simulate physics allows for more efficient use of CPU resources. Lower CPU load translates into lower energy consumption, which has a positive impact on reducing the carbon footprint. This makes the invention more eco-friendly and cost-effective.

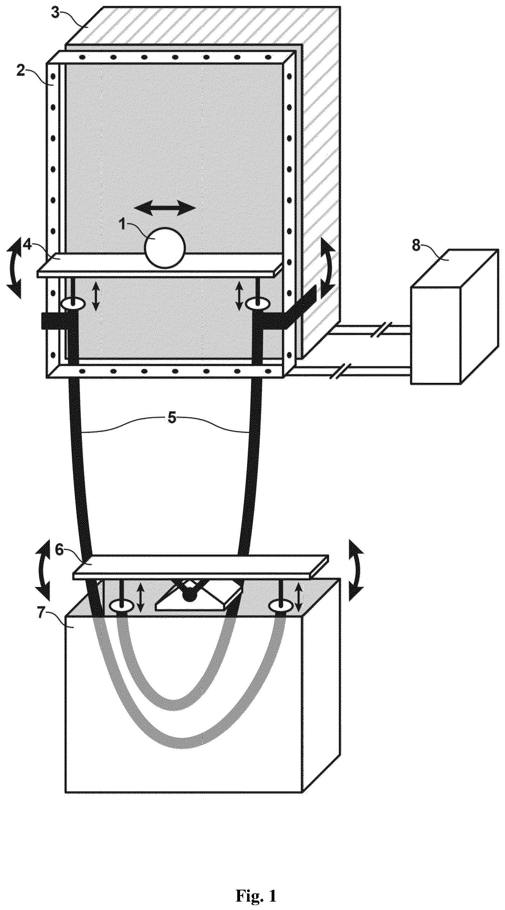

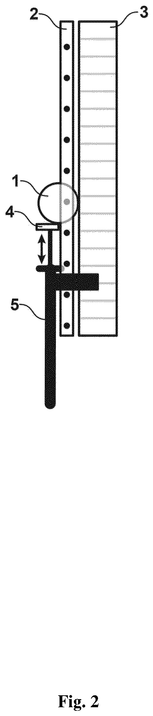

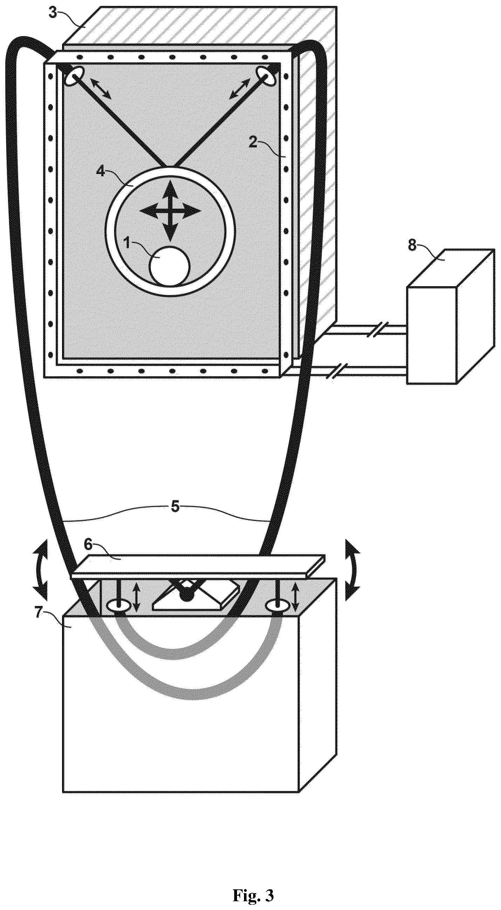

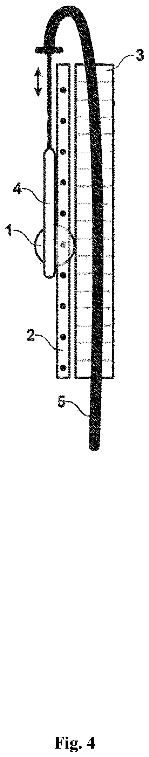

The solution according to the invention is shown in the picture, where Fig. 1, illustrates the device in the overall view (version with moving base), Fig. 2 presents side view of the device (version with moving base), and Fig. 3 illustrates the device in the overall view (version with moving ring), Fig. 4 presents side view of the device (version with moving ring).

### Example 1:

The electro-mechanical controller consists of the following components: the cover (7) made of powder coated steel, the physical object (1) being a ball having a mass of 150 g, the moving base (4) made of 16 mm thin polycarbonate having a length of 50 cm, on which the object (1) is placed and moved, the user mechanical manipulator (6) - swinging steel platform having a length of 50 cm mounted in the centre on adjustable bearing, mechanical linkages (5) - being a long pull and push Bowden cable having a length of 120 cm, IR frame (2) - having a diagonal of 50" made of aluminium, with IR sensors and USB connector, located between the moving element (4) and the display (3) - 50" LCD monitor, with sensors that detect the object's (1) position while its movement in the IR frame (2) view, a data-processing module (8) with control software that analyses the data from the IR frame (2) and, based on that data, responds to the movement of the object (1) or cursor in a computer program. The controller is equipped with vibration and touch systems.

### Example 2:

The electro-mechanical controller consists of the following components: the cover (7) made of powder coated steel, the physical object (1) being a ball having a mass of 150 g, the moving ring (4), made of 16 mm thin polycarbonate having an outer diameter of 20 cm and an inner diameter of 18 cm, within which the object (1) is placed and moved, the user mechanical manipulator (6) - swinging steel platform having a length of 50 cm mounted in the centre on adjustable bearing, mechanical linkages (5) - being a long pull and push Bowden cable having a length of 120 cm, IR frame (2) - having a diagonal of 50" made of aluminium, with IR sensors and USB connector, located between the moving element (4) and the display (3) - 50" LCD monitor, with sensors that detect the object's (1) position while its movement in the IR frame (2) view, a data-processing module (8) with control software that analyses the data from the IR frame (2) and, based on that data, responds to the movement of the object (1) or cursor in a computer program. The controller is equipped with vibration system.

## Claims

1. An electro-mechanical controller for computer software, in particular for computer games, allowing association the motion of a reference physical object moved by the user with the computer software, **characterized in that** a moving element (4), within which the object (1) is placed and moved, is linked to an user manipulator (6) by mechanical connectors (5), and the IR frame (2) located between the moving element (4) and a display (3) reads in real time the object's (1) position while its movement in the IR frame (2) view and transmits it to the data-processing module (8).

2. A controller according to the claim 1, **characterized in that** a moving element (4) is a base.

3. A controller according to the claim 1, **characterized in that** a moving element (4) is a ring.

4. A controller according to the claim 1, **characterized in that** a moving element (4) is a treadmill.

5. A controller according to the claim 1, **characterized in that** an user manipulator (6) is electric.

6. A controller according to the claim 1, **characterized in that** an user manipulator (6) is mechanical.

7. A controller according to the claim 1, **characterized in that** the mechanical connectors (5) are cables.

8. A controller according to the claim 1, **characterized in that** the mechanical connectors (5) are linkages.

9. A controller according to the claim 1, **characterized in that** the mechanical connectors (5) are actuators.

10. A controller according to the claim 1, **characterized in that** a controller is equipped with vibration system.

11. A controller according to the claim 1, **characterized in that** a controller is equipped with touch system.
